# EUROPEAN PATENT APPLICATION

(11) **EP 3 334 073 A1**
(43) Date of publication of application: **13.06.2018**
(21) Application number: 16306624.4
(22) Date of filing: 06.12.2016
(51) Int. Cl.: H04J 14/02

(54) **SUBMARINE TERMINAL SUPPORTING ALIEN TERMINALS AND FAST NOISE LOADING RECONFIGURATION**

(71) Applicant: Alcatel Lucent, 91620 Nozay (FR)
(72) Inventor: CHARLET, Gabriel, 91620 Nozay (FR); LEROY, Arnaud, 91620 Nozay (FR)
(74) Representative: Novagraaf Technologies

(57) **Abstract**

The present invention relates to a Submarine Line Terminal Equipment - SLTE - (100, 200, 300) for undersea system comprising:
- an Amplified Spontaneous Emission - ASE - noise loading source (102) adapted to generate a wide band ASE noise signal;
- at least one input adapted to connect an alien terminal (106, 108, 109); and
- a multiplexer (104),
wherein the SLTE also comprises
- at least one coupler (110) adapted to split in two substantially identical signals the wide band ASE noise signal;
- a filter (120) adapted to filter each signals obtained from the coupler (110) at determined wavelengths, the wavelengths being determined according to the wavelengths of channels containing the information to be transmitted, and according to the connected alien terminal (106, 108, 109) wavelength and state,
the multiplexer (104) being adapted to multiplex the channels, the filtered ASE noise signals (121, 122, 123, 124) and the alien terminal (106, 108, 109) signal together.

## Description

### Field of the Invention

The present invention relates to a Submarine Line Terminal Equipment (SLTE) for undersea system.

### Background

Submarine Line Terminal Equipment (SLTE) is the signal processing equipment and optical multiplexing equipment that allows transmission over a submarine system. SLTEs have to:
- provide a way to insert channels containing the information to transmit in the line and coming from a loading channel terminal;
- load the submarine line with Amplification Spontaneous Emission (ASE) noise, the submarine line operating at constant output power; and
- open the line to alien terminal which are terminals external to the loading channel terminal.

The cost of such equipment being very expensive, it is important to maximize the performance of the line and to have an excellent reliability.

Currently, three types of SLTE are used.

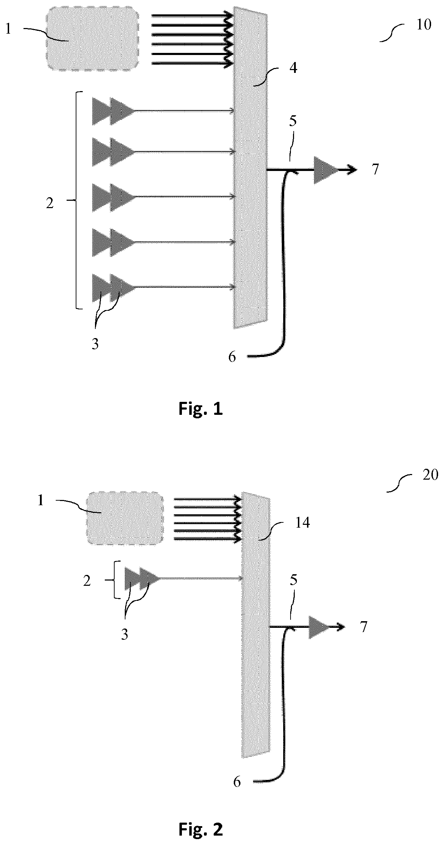

In the first type illustrated in Figure 1, the SLTE 10 comprises:
- a loading channel terminal 1;
- multiple ASE noise sources 2, each one generated by two optical amplifiers 3 abutted;
- a multiplexer 4 adapted to multiplex the channels of the loading channel terminal 1 with the multiple ASE noise signals 2; and
- a coupler 5 which coupled the multiplexed signal with the signal of an alien terminal 6 before amplifying the signal obtained by another optical amplifier 3 and injecting it into a submarine fiber 7.

The channels are loaded in fixed subband like in the 1620 Softnode terminal of Nokia, and the alien terminal 6 can be connected to a fixed subband through a 3dB coupler 5. When the alien terminal 6 signal is lost an ASE noise signal must typically be connected in the corresponding subband to replace it.

So, this solution is not flexible and requires to connect (costly) noise loading source 2 to all the unused fixed subbands.

In the second type of currently used SLTE illustrated in Figure 2, the SLTE 20 only comprises one ASE noise source 2.

The ASE noise signal and channels are loaded through a reconfigurable multiplexer 14 (typically a WSS) which filters the ASE noise signal according to the channels and according to the specter of the alien terminal 6 which will be connected. After that, the multiplexer 14 multiplexes the channels and the filtered ASE noise together. The alien terminal 6 is then connected by being coupled with the multiplexed signal through a 3dB coupler 5.

The WSS 14 being a reconfigurable multiplexer, it can configure each of its ports. This is why, only one ASE noise source 2 is required for this SLTE 20.

In this configuration, the isolation of the WSS 14 has to be large enough to avoid injecting some noise under all the wavelengths used for signal. The insertion of the alien wavelength is done through the 3dB coupler 5. Though, Alien terminals may add noise to other wavelength of the signal or may interfere (no control at this point). So, the number of alien terminal 6 to be connected (by 3dB couplers 5) must be limited.

Isolation is a critical issue in telecommunication, a bad isolation can generate cross-talking in the line and deteriorates the signal and the information to be transmitted. The WSS 14 allocated spectral regions to each of its input ports, though the ASE noise source has a wide band specter. So if the WSS isolation is not good enough, there will subsist ASE noise "under" the channels' specter which will degrade the performances of the channels. A good isolation is an isolation better than 35dB.

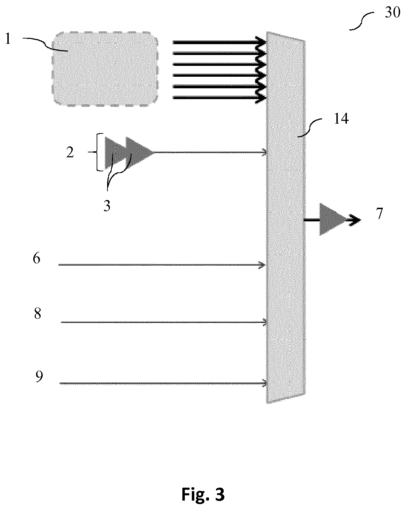

In the third and last type of SLTE, illustrated in Figure 3, the alien terminal 6 can be connected through the reconfigurable multiplexer 14, typically a WSS. Several alien terminals like 8, 9 can be connected on the different ports of the WSS 14.

However, this configuration has the same drawbacks as the previous one in that the isolation of the WSS 14 has to be large enough to avoid injecting some noise under all the wavelengths used for signal. High isolation WSS are not common and very expensive.

Furthermore, one issue not solved by this configuration is when one alien terminal is lost due to a fiber cut, an optical amplifier failure, or a terminal failure... This will significantly reduce the signal power injected within the line. As the submarine line operates at constant output power, the power of the remaining channel will be too large and will induce sever nonlinear distortions which may kill the channels.

In case of loss of one terminal (an alien terminal or the channel loading terminal), the WSS 14 may be reconfigured. But the reconfiguration time is in the order of several seconds which is way too long for some customers.

So there is a need for a flexible, reliable and fast reconfigurable SLTE for undersea systems.

### Summary

The present invention proposes a Submarine Line Terminal Equipment (SLTE) for undersea system to solve the prior art drawbacks.

In a first and general embodiment, the SLTE comprises:
- an Amplified Spontaneous Emission (ASE) noise loading source adapted to generate a wide band ASE noise signal;
- at least one input adapted to connect an alien terminal; and
- a multiplexer,
wherein the SLTE also comprises
- at least one coupler adapted to split in two substantially identical signals the wide band ASE noise signal;
- a filter adapted to filter each signals obtained from the coupler at determined wavelengths, the wavelengths being determined according to the wavelengths of channels containing the information to be transmitted, and according to the connected alien terminal wavelength and state, the multiplexer being adapted to multiplex the channels, the filtered ASE noise signals and the alien terminal signal together.

Advantageously, the SLTE further comprises:
- a photodiode adapted to detect the state of the alien terminal;
- a switch adapted to select the filtered ASE noise signal to replace the alien terminal signal when said alien terminal signal is lost.

Advantageously, the SLTE further comprises another photodiode adapted to detect the presence of a signal at the output of the switch.

Advantageously, the filter is an array of wavelength blockers.

Advantageously, the SLTE further comprises optical amplifiers adapted to amplify the filtered ASE noise signals.

Depending on the option, the optical amplifiers are Erbium Doped Fiber Amplifiers (EDFA) which can be N times redundant pumps, N being an integer between 2 and 4.

In this case, the SLTE can further comprise Variable Optical Attenuators (VOA) at the input and output of the optical amplifiers, and adapted to control the input and output power of the filtered ASE noise signals to provide an output signal adapted to the submarine fiber in which the multiplexed signal is inserted.

Advantageously, the SLTE further comprises a Variable Optical Attenuator (VOA) adapted to modify the power of the connected alien terminal signal according to the power injected into an undersea fiber.

Advantageously, the multiplexer is a Wavelength Selective Switch (WSS).

Advantageously, the SLTE further comprises an optical amplifier adapted to amplify the multiplexed signal before injecting it into a submarine fiber.

### Brief Description of the Drawings

Some embodiments of apparatus in accordance with embodiments of the present invention are now described, by way of example only, and with reference to the accompagnying drawings, in which :
- The Figure 1 schematically illustrates a current type of Submarine Line Terminal Equipment (SLTE) used by persons skilled in the art.
- The Figure 2 schematically illustrates a second type of currently used SLTE.
- The Figure 3 schematically illustrates a third type of currently used SLTE.
- The Figure 4 schematically illustrates a first and general SLTE embodiment;
- The Figure 5 schematically illustrates a second SLTE embodiment;
- The Figure 6 schematically illustrates a third SLTE embodiment; and
- The Figure 7 schematically illustrates an implementation of pump sharing and Variable Optical Attenuators (VOA) for optical amplifiers.

### Description of Embodiments

As described before, Figures 1-3 illustrate different types of Submarine Line Terminal Equipment (SLTE) 10, 20 and 30, currently used by persons skilled in the art. All these types typically comprise:
- a loading channel terminal 1 comprising the channels containing the information to be transmitted;
- at least one or more ASE noise sources 2, each one generated by two optical amplifiers 3 abutted; and
- a multiplexer 4 or 14.

In some cases, like in Figures 1 and 2, the alien terminal signal 6 is inserted into the submarine line 7 by using a 3dB coupler 5 after the multiplexing of the channels containing the information and the noise signal by the multiplexer 4.

In the third case, shown in Figure 3, the alien terminal signals 6, 8 and 9 are connected to the input of the multiplexer 14 which multiplexes all the channels, the noise signal and the alien terminal signals together before injecting the multiplexed signal into the submarine fiber 7.

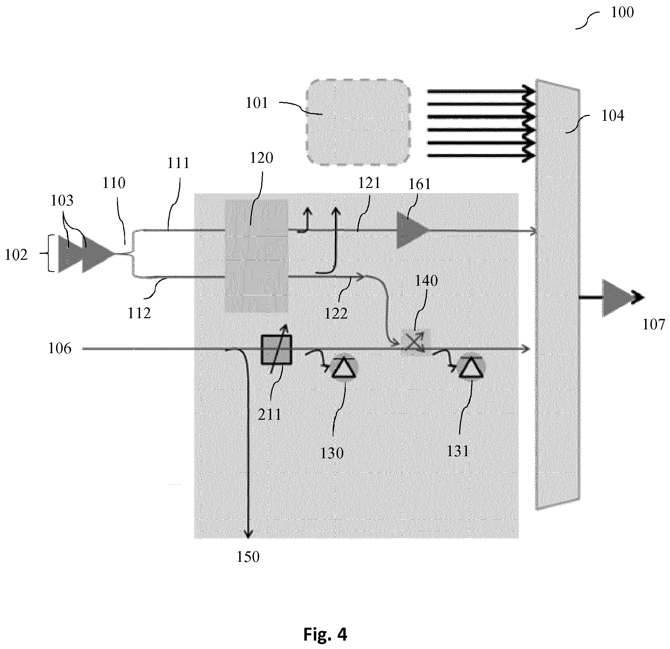

In a first and general embodiment, a SLTE 100, schematically illustrated in Figure 4, is adapted to receive channels containing the information to be transmitted, which can come from a loading channel terminal 101; and the SLTE comprises:
- an ASE noise loading source 102, adapted to generate a wide band ASE noise signal, which can be made by two abutted optical amplifiers 103;
- an input adapted to connect an alien terminal 106 and
- a multiplexer 104, typically a Wavelength Selective Switch (WSS) which has one input and P outputs or vice versa (P generally varying between 4, 9 and 20 depending on the model).

The SLTE also comprises :
- a coupler 110 adapted to split in two substantially identical signals 111 and 112 the wide band ASE noise signal; and
- a filter 120 adapted to filter each signals 111 and 112 obtained at the output of the coupler 110 at determined wavelength determined according to the channels wavelengths, and according to the connected alien terminal 106 wavelength and state.

In fact, the first signal 111 obtained from the coupler 106 is used as the general ASE noise signal 121 which helps the submarine line 107 to operate at a constant output power. And the second signal 112 obtained from the coupler 106 is used to replace the alien terminal 106 signal if it is lost so that the submarine line 107 continues to operate at a constant output power.

So, in the case where the alien terminal 106 signal is present, the filter 120 is adapted to filter or block all the second ASE noise signal 112 obtained at the output of the coupler 110 and filters the first ASE noise signal 111 so that only the wavelengths different from the channels and the alien terminal 106 signal enter into the multiplexer 104.

In the case where the alien terminal 106 signal is lost, the filter 120 filters the second ASE noise signal 112 so that the filtered signal 122 has the same spectrum as the alien terminal 106 signal in order to replace it in the submarine fiber 107, and the filter 120 filters the first ASE noise signal 111 so that all other wavelengths, except the ones of the channels and of the signal replacing the alien terminal 106 signal, go into the multiplexer 104.

In order to detect the state of the alien terminal 106, if its signal is present or not, a photodiode 130 can be added to the present embodiment. A portion of the alien terminal 106 signal is sent to the photodiode 130 which is adapted to detect a loss of power from the alien terminal 106. For such application, the portion sent to the photodiode 130 is generally equal to 1% of the signal.

In order to proceed to the replacement of the alien terminal 106 signal, a switch 140 can also be added to the present embodiment, and adapted to select which signal to send to the multiplexer 104 between the alien terminal 106 signal and the filtered ASE noise signal 122 adapted to replace the alien terminal 106 signal depending on the status of said alien terminal 106 signal.

So, when a loss of power from the alien terminal 106 signal is detected, the switch 140 selects the filtered ASE noise signal 122 which spectrum has been adapted to replace the spectrum of the alien terminal 106 signal lost.

The determination of the spectrum of the alien terminal 106 signal can be made by sending a portion of the input alien terminal 106 signal into an optical spectrum analyser (OSA) 150. Generally, spectrum measurement requires more power than a photodiode, so the portion of the input alien terminal 106 signal sent to the OSA 150 is rather around 2 to 5%.

Preferably, the filter 120 is an array of Wavelength Blockers (WB). WB having one input and one output, each WB will spectrally select the portion of the spectrum which will be used for noise loading, for example for the general ASE noise signal, or for one of the alien terminal which signal needs to be replaced. Furthermore, by cascading the filtering function of the WB and the one of the multiplexer 106, the requirement of high isolation on the multiplexer 106 is removed because the extinction ratio of the unwanted wavelengths (corresponding to the channels' wavelength) in the filtered ASE noise loading signals 121 and 122 is improved.

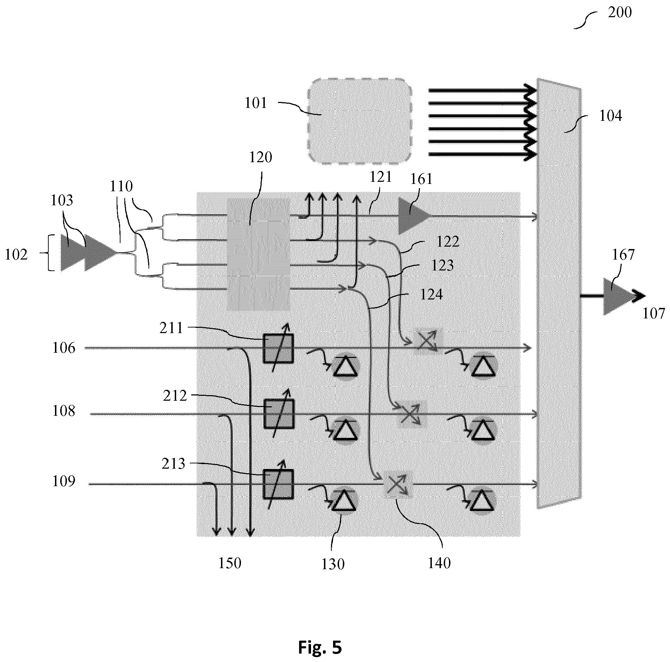

In another embodiment, the first embodiment can be generalized to a SLTE 200 having multiple inputs for connecting multiple alien terminals. An example is illustrated in Figure 5, wherein two alien terminals 108 and 109 have been added. So, to be able to replace their signal in case of failure, the signal of the ASE noise loading source is divided into four substantially identical signals by adding two couplers 110 placed in parallel after the first one.

The filter 120, filters each signal depending on their function. The first filtered ASE noise signal 121 is used as the general ASE noise signal of the SLTE 200 to help the submarine line operate at a constant output power, and the other ones 122, 123 and 124 are used to respectively replace the signal of the alien terminals 106, 108 and 109. The spectrum of each alien terminal signal 106, 108 and 109 is analysed at the entrance of the SLTE by an OSA 150 in the same manner as previously described. A switch 140 is also added on every connected alien terminal line to select which signal to send to the multiplexer 104 between the alien terminal (106, 108 or 109) signal and the corresponding filtered ASE noise signal (respectively 122, 123 and 124) depending on the status of the alien terminal (106, 108 or 109) which is given by an photodiode 130 also placed on the connected alien terminal line (106, 108 or 109).

Advantageously, the powers of the filtered ASE noise signals 122, 123 and 124 are adapted by optical amplifiers 162, 163 and 164 so that each replacing signal 122, 123 and 124 has the same power as the alien terminal 106, 108 or 109 signal they will replace, before their loss. The power of the general ASE noise signal 121, previously filtered to have a spectrum complementary to the spectrum of the channels and the spectrum of the alien terminals 106 and/or 108 and/or 109 connected or of their replacing signals 122 and/or 123 and/or 124, can also be adapted by an optical amplifier 161 so that the submarine line 107 operates at constant output power which is distributed across all the spectrum supported by the fiber 107.

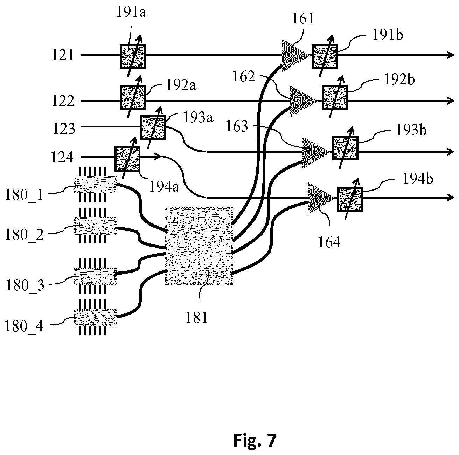

The optical amplifiers 161, 162, 163 and 164 used in such embodiment can be Erbium Doped Fiber Amplifiers (EDFAs) and to ensure the reliability of the noise loading system, a common, N times redundant pump, as shown in Figure 7 wherein N=4, can be used for the four optical amplifiers 161, 162, 163 and 164.

This N redundant pump (with N being an integer typically between 2 and 4) is composed of N pumps 180_i (i = 1 to N) and a NxN coupler (181). It is to be noted that a 3dB coupler is also called a 2x2 coupler comprising 2 inputs and 2 outputs. A 4x4 coupler is composed of four 2x2 couplers, and has 4 inputs and 4 outputs. It is a standard element which can be realised by various technologies (fused fiber, planar lightwave circuit, etc.). If four amplification diodes are connected at the inputs of the 4x4 coupler, the power is distributed equally among the outputs of the 4x4 coupler. If one of the diodes fails, the amplification decreases by 25% so the power of the signal at the output of the 4x4 coupler decreases by approximately 25% too. And if all the diodes fail, the pump does not amplify the signal anymore but lessen it.

When using optical amplifiers and in particular a N redundant pump, the SLTE (100, 200, 300) may also comprise a Variable Optical Attenuator (VOA) 191a/b, 192a/b, 193a/b and 194a/b, at the input (respectively 191 a, 192a, 193a and 194a) and output (respectively 191 b, 192b, 193b and 194b) of the optical amplifers 161, 162, 163 and 164, adapted to control the input and output powers of the signals, respectively 121, 122, 123 and 124, and adapted to provide an output signal adapted to the submarine fiber 107 in which the multiplexed signal is inserted.

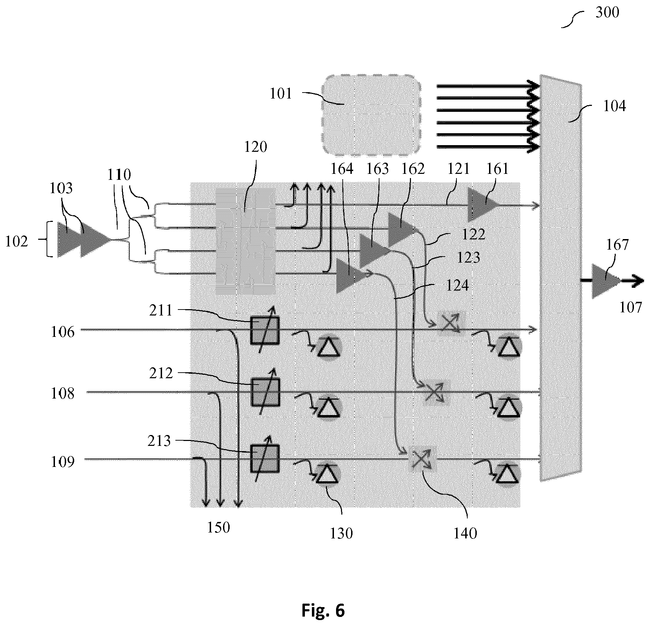

Advantageously, the power of each alien terminal 106, 108 and 109 signal is also controlled by a Variable Optical Attenuators (VOA), respectively 182, 183 and 184 on Figures 4-6 , adapted to control the input and output powers of the alien terminal signal, respectively 106, 108 and 109 to provide an output signal adapted to the submarine fiber 107 in which the multiplexed signal is inserted.

Advantageously, another photodiode 130 can be added after the switch 140 which is adapted to select the filtered ASE noise signal 122, 123 or 124 so that it replaces the alien terminal 106, 108 or 109 output signal when said alien terminal 106, 108 or 109 output signal is lost. This additional photodiode 130 is adapted to detect the presence of a signal which can be the alien terminal 106, 108 or 109 signal or its replacing ASE noise signal respectively 122, 123 or 124, or no signal at all. If no signal is detected, the filter 120 will adapt the specter of the general ASE signal 121 to replace the missing signal and the optical amplifier 161 will adapte the power of the general ASE signal 121 to compensate the power of the lost signal.

Advantageously, the multiplexed signal obtained at the output of the multiplexer 104 is amplified before being injected into the submarine fiber 107 by an optical amplifier 167 to compensate the optical losses due to the propagation in the submarine fiber 107.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A Submarine Line Terminal Equipment - SLTE - (100, 200, 300) for undersea system comprising:
- an Amplified Spontaneous Emission - ASE - noise loading source (102) adapted to generate a wide band ASE noise signal;
- at least one input adapted to connect an alien terminal (106, 108, 109); and
- a multiplexer (104),
wherein the SLTE also comprises
- at least one coupler (110) adapted to split in two substantially identical signals the wide band ASE noise signal;
- a filter (120) adapted to filter each signals obtained from the coupler (110) at determined wavelengths, the wavelengths being determined according to the wavelengths of channels containing the information to be transmitted, and according to the connected alien terminal (106, 108, 109) wavelength and state,
the multiplexer (104) being adapted to multiplex the channels, the filtered ASE noise signals (121, 122, 123, 124) and the alien terminal (106, 108, 109) signal together.

2. The Submarine Line Terminal Equipment - SLTE - (100, 200, 300) of claim 1 further comprising:
- a photodiode (130) adapted to detect the state of the alien terminal (106, 108, 109);
- a switch (140) adapted to select the filtered Amplified Spontaneous Emission - ASE - noise signal (122, 123 or 124) to replace the alien terminal (respectively 106,108 or 109) signal when said alien terminal (106, 108 or 109) signal is lost.

3. The Submarine Line Terminal Equipment -SLTE- (100, 200, 300) according to claims 2 further comprising another photodiode (130) adapted to detect the presence of a signal at the output of the switch (140).

4. The Submarine Line Terminal Equipment - SLTE - (100, 200, 300) according to one of the previous claims wherein the filter (120) is an array of wavelength blockers.

5. The Submarine Line Terminal Equipment - SLTE - (100, 200, 300) according to one of the previous claims further comprising optical amplifiers (161, 162, 163, 164) adapted to amplify the filtered Amplified Spontaneous Emission - ASE - noise signals (121, 122, 123, 124).

6. The Submarine Line Terminal Equipment - SLTE - (100,200, 300) of claim 5 wherein the optical amplifiers (161, 162, 163, 164) are Erbium Doped Fiber Amplifiers - EDFA.

7. The Submarine Line Terminal Equipment - SLTE - (100, 200, 300) of claim 6 wherein the Erbium Doped Fiber Amplifiers - EDFA - are N times redundant pumps, N being an integer between 2 and 4.

8. The Submarine Line Terminal Equipment - SLTE - (100, 200, 300) of claim 7 further comprising Variable Optical Attenuators - VOA - (191 a/b, 192a/b, 193a/b, 194a/b) at the input and output of the optical amplifiers (161, 162, 163, 164), and adapted to control the input and output power of the filtered Amplified Spontaneous Emission - ASE - noise signals (121, 122, 123, 124) to provide an output signal adapted to the submarine fiber (107) in which the multiplexed signal is inserted.

9. The Submarine Line Terminal Equipment - SLTE - (100, 200, 300) according to one of the previous claims further comprising a Variable Optical Attenuator - VOA - (211, 212, 213) adapted to modify the power of the connected alien terminal (106, 108, 109) signal according to the power injected into an undersea fiber (107).

10. The Submarine Line Terminal Equipment - SLTE - (100, 200, 300) according to one of the previous claims wherein the multiplexer (104) is a Wavelength Selective Switch - WSS.

11. The Submarine Line Terminal Equipment - SLTE - (100, 200, 300) according to one of the previous claims further comprising an optical amplifier adapted to amplify the multiplexed signal before injecting it into a submarine fiber (107).
